# EUROPEAN PATENT SPECIFICATION

(11) **EP 4 244 288 B1**
(45) Date of publication and mention of the grant of the patent: **31.07.2024**
(21) Application number: 21814712.2
(22) Date of filing: 11.11.2021
(51) Int. Cl.: C08L 67/02

(54) **POLYESTER-BASED COMPOSITION WITH HIGH BARRIER PROPERTIES AND ARTICLES OF PACKAGING CONTAINING THE SAME**
ZUSAMMENSETZUNG AUF POLYESTERBASIS MIT HOHEN BARRIEREEIGENSCHAFTEN UND DIESE ENTHALTENDE VERPACKUNGSARTIKEL
COMPOSITION À BASE DE POLYESTER AYANT DES PROPRIÉTÉS DE BARRIÈRE ÉLEVÉES ET ARTICLES D'EMBALLAGE CONTENANT CELLE-CI

(30) Priority: 12.11.2020 IT 202000027158
(43) Date of publication of application: 20.09.2023
(73) Proprietor: Point Plastic Srl, 00034 Colleferro (RM) (IT)
(72) Inventor: SEVERINI, Tonino, 00034 Colleferro (RM) (IT); SEVERINI, Luca, 00038 Valmontone(RM) (IT); PELLEGRINI, Francesca, 00038 Valmontone(RM) (IT)
(74) Representative: Zanoli, Enrico
(86) International application number: PCT/EP2021/081339
(87) International publication number: WO 2022/101321

(56) References cited:
- WO-A1-2016/073300
- WO-A1-2016/123330
- WO-A1-2017/160528

## Description

### TECHNICAL FIELD OF THE INVENTION

The present invention relates to a polyester-based composition with high gas barrier properties, and to articles of packaging comprising the same.

More particularly, the invention relates to a polyester-based composition with high barrier properties to oxygen and carbon dioxide, and to containers made with such composition for advantageous use in the preservation of food products, particularly in a modified atmosphere, which are also suitable to be fully recycled after use.

The food market for large-scale distribution (supermarket chains and the like) requires increasingly sophisticated packaging and packing materials, especially to increase the shelf life of the food itself and the aesthetic quality of the packages, for example as regards the transparency of the container.

The characteristic property of many packages therefore lies in the ability to keep the atmosphere as unaltered as possible, i.e., the gas composition artificially created inside the packaging at the time of packaging the food product. One of the major problems in food preservation is in fact related to the contact of the food with oxygen, which causes a rapid oxidation, thus changing flavour and quality. For this purpose, the packaging of the food product is often followed by a flushing with inert gas mixtures such as nitrogen and carbon dioxide, which are introduced into the container before it is closed, replacing the air. This type of packaging is called MAP ("Modified Atmosphere Packaging"). It therefore becomes an essential requirement of the container to have a good impermeability to gases, especially to oxygen, to prevent atmospheric oxygen from penetrating inside the container, and possibly, also to carbon dioxide, to prevent it from escaping from the container, thus altering the composition of the modified atmosphere. The CO₂ barrier is also essential for carbonated beverage containers to prevent the release of gas through the container walls.

In addition to the above, it is important that the packaging is recyclable and therefore compliant with the so-called "Circular Economy". WO2016073300A1 discloses provides a composition comprising: a polyester base polymer; an oxidizable polyether-based additive; and a transition metal catalyst, wherein the polyester base polymer is substantially free of antimony. Containers made from the composition are substantially clear and exhibit excellent oxygen scavenging properties with little to no induction period.

### PRIOR ART

Packages with oxygen barrier characteristics are widely present on the market but almost all are made using mixtures of different polymers associated with a base polymer, selected from polyethylene terephthalate (PET), polybutylene terephthalate (PBT), polylactic acid (PLA), polypropylene (PP), linear low-density polyethylene (LLDPE), polystyrene (PS). As it is known, none of the aforementioned polymers has the barrier characteristics required for the production of MAP packaging containers, and must therefore be combined with at least a second polymer, which, suitably inserted into the structure of the container, provides the specific barrier properties to oxygen and to CO₂.

One of the polymers capable of forming an oxygen and CO₂ barrier in PET rigid films is the ethylene-vinyl alcohol copolymer (EVOH), which, coupled in multilayer to PET both in extrusion processes and in injection processes for production of the article, is capable to impart excellent barrier properties.

Another polymer used to improve the oxygen and CO₂ barrier characteristics is a polyamide selected from the group of partially aromatic polyamides in which the amide bond contains at least one aromatic ring and one non-aromatic group, such as: poly(m -xylylylene adipamide); poly(hexamethylene isophthalamide); poly(hexamethylene adipamide-co-isophthalamide); poly(hexamethylene adipamide-co-terephthalamide); poly(hexamethylene isophthalamide-co-terephthalamide); or mixtures of two or more of these. A widely used polyamide is poly(m-xylylene adipamide), also known as "Nylon MXD6", both in multilayer and in mass on the polymer. In order to increase the oxygen barrier characteristics, however, Nylon MXD6 must be associated with transition metals.

EP 2272912 B1 describes a method for manufacturing polyester (PET) containers with barrier effect through the prior formation of pre-mixtures of PET and a polyamide with the addition of a transition metal salt as a compound capable of capturing oxygen ("scavenger"). The quantity of polyamide used is important, varying from 25 to 75% by weight of the pre-mixture, as is the quantity of the transition metal, which varies from 20 to 20,000 ppm. The pre-mixture is then blended with a base polyester to obtain the final composition to be used in the production of container preforms.

EP 2588528 B1 relates to a plastic material capable of forming an oxygen barrier by virtue of a composition comprising a polyester, a polyamide, a transition metal and an organic compound selected from paraffins, vegetable oils, polyalkylene glycols, esters of polyols, alkoxylates, and mixtures thereof. The composition comprises from 1 to 10% by weight of polyamide, from 0.00001 to 0.8% by weight of transition metal and from 0.01 to 2% by weight of organic compound. When the organic compound is a polyalkylene glycol, its molecular weight ranges from 200 to 600 g/mol.

WO 2018/182824 A1 relates to a polyester-based (PET) composition which includes two distinct additives with an oxygen blocking function (defined OS1 and OS2, i.e. "Oxygen Scavenger 1" and "Oxygen Scavenger 2"), each selected from a polyether diol, a polyether-polyester block copolymer and a derivative of a polyether diol with a chain terminated by an ether, wherein the first additive has a molecular weight between 10000 and 100000 and the second additive has a molecular weight between 200 and 5000; and furthermore the composition contains a transition metal. The oxygen blocking function is obtained through the oxidation of the additives OS1 and OS2 by the molecular oxygen of the air, catalysed by the transition metal.

The materials described above, while providing an increase in oxygen and CO₂ barrier properties, exhibit serious problems when they must be recycled as they are not perfectly compatible with PET. This deficiency generates serious damage to the recycling chain, which is interrupted in its circularity precisely due to the non-reuse of trays and bottles in the domestic recycling step.

As regards the so-called "active" systems, in which only oxygen, and not CO₂, is blocked, that is consumed, through a chemical reaction of oxidation of an oxidizable polymer or an oxidizable compound, it is evident that they involve the introduction in multilayer or mass of an oxidizable additive and of a catalyst of a transition metal to carry out the oxidation reaction of the additive.

Also in this case the multi-material approach has the disadvantage of a lack of complete recyclability of the packaging, especially the technology that uses Nylon MXD6 or other polyamides, or polymers such as polybutadiene or copolymers of ethylene and vinyl alcohol. The use of films containing polyamides (PA), on the other hand, involves the phenomenon well known in the literature of the discoloration of polyamides when treated at temperatures above 250 °C, as well as the immiscibility of PAs with PET. Furthermore, adequate oxygen barrier properties require the use of relatively high quantities of PA, up to about 5-8% of the total container. Therefore, during the reuse of the material in the recycling step, there is a strong yellowing of the PA fraction, which significantly worsens the optical quality of the resulting product, both in terms of colour and in terms of opacity. Excessive overheating of the polyamide fraction can also lead to embrittlement phenomena of the leaf.

Furthermore, the oxidation technique poses, in addition to the aforementioned drawbacks relating to recyclability, also the problem of the presence of transition metals, e.g. iron or cobalt, inside the packaging, as the presence of these metals is subject to strict scrutiny by the health authorities.

Finally, a further problem of "active" barriers concerns the duration of the oxygen barrier properties, considering that they are exhausted with the consumption of the additive by the oxidation reaction. To extend the life of the barrier, therefore, it would be necessary to use high quantities of additive, which however would further compromise the recyclability of the product, in addition to creating problems of transfer to the food contained in the package.

WO 2017/160528 A1 relates to processes for making compatibilized high aspect ratio barrier additives and polymer compositions containing them. The barrier additives are layered inorganic compounds whose individual layers possess high aspect ratios, such as montmorillonites, vermiculites, with double hydroxides such as hydrotalcite being preferred. These layered compounds with high aspect ratio are described as defining a tortuous path for any gas molecule to transit from one surface of the article to the opposite surface, thus keeping such molecules on the inside or the outside of the article. Therefore, these layered inorganic compounds are responsible for the barrier effect. The process to make compatibilized high aspect ratio barrier additives requires also the use of compatibilization agents. Several compounds are mentioned as compatibilizers, including those providing a matrix of poly(ethylene glycol)units, such as polyethylene glycol tridecyl ether phosphate (Crodafos T-6A or T-16A), polyethylene glycol phenyl ether phosphate (Rhodafac RP-710) and polyethylene glycol tristyrylphenyl ether phosphate (Stepfac TST-PE). Despite the use of barrier additives and compatibilizers, Example 5 reports no statistically significant reduction of the permeability to oxygen of a sidewall sample from a PET bottle.

The need is therefore felt to have a polymeric material for the production of articles of packaging with high gas barrier properties in which any additives are completely recyclable together with the base polymers.

An object of the present invention is therefore to provide a polymeric material for making food containers such as trays, small trays, bottles and the like, which offer a sufficient barrier to the entry of oxygen into the container to preserve the quality of the food product contained therein.

Another object of the invention is to provide a polymeric material for making containers intended to contain foods in a modified atmosphere, for example in a carbon dioxide atmosphere, capable of giving the container a barrier effect also against carbon dioxide, so that this can be effectively retained inside the container and maintain the modified atmosphere regime for the conservation period envisaged for the food contained therein ("shelf life").

A further object of the invention is to provide a polymeric material for the production of food containers in which the barrier effect to gases is of a "passive" type, that is, it is based on a physical barrier action free from typical chemical reactions of "active" barrier systems.

### SUMMARY OF THE INVENTION

Surprisingly, the present inventors have succeeded in developing a new gas barrier system based on a family of molecules that simultaneously offer a gas barrier, recyclability, use of a modest amount of additive required and an unlimited duration of the barrier by virtue of the passive barrier mechanism which once present in the product remains unchanged for the entire life of the packaging.

An aspect of the invention therefore relates to a polymeric composition comprising:
A) a thermoplastic polyester selected from the group consisting of polyethylene terephthalate, copolymers of polyethylene terephthalate containing up to 15% by moles of units derived from other aromatic acids selected from isophthalic acid and naphthalenedicarboxylic acid and/or with other diols selected from 1.4-butanediol (1.4-BDO) and cyclohexandimethanol (CHDM), polybutylene terephthalate (PBT) and copolymers of polybutylene terephthalate containing up to 10% by moles of units derived from other aromatic acids selected from isophthalic and naphthalenedicarboxylic acid and/or with other diols selected from 1,2-ethanediol and cyclohexanediethanol (CHDM), and mixtures thereof, and polylactic acid (PLA); and
B) a barrier additive consisting of a polyalkylene glycol of the formula H-(O-R)n-OH, in which R is a linear or branched alkylene group having 2 to 10 carbon atoms, and n is from 4 to 1000;
wherein:
i. said polyester A) is present in the polymeric composition in an amount from 80 to 99.5% by weight and said additive B) is present in the polymeric composition in a quantity from 0.5 to 20% by weight, said amounts being referred to the sum of components A) and B); and
ii. said polymeric composition is free from polyamides and additives susceptible to catalytic oxidation by atmospheric oxygen.

According to an aspect of the present invention, the barrier additive is free from inorganic barrier additives.

Another aspect of the invention relates to the use of the polymeric composition defined above for the production of an article of packaging.

A further aspect of the invention relates to an article of packaging comprising the polymeric composition defined above.

### DETAILED DESCRIPTION

An aspect of the present invention relates to a polymeric composition which is useful in the production of packaging for products, for example food, which can be altered by contact with oxygen, and which therefore must be protected by giving the packaging oxygen barrier properties. Furthermore, the product contained in the packaging can be a food product preserved in a modified atmosphere with carbon dioxide, therefore the packaging according to the invention also exhibits a barrier effect to the escape of carbon dioxide.

The polymer composition according to the invention comprises a polyester-based thermoplastic polymer (A) and a polyether-based additive (B), in which the composition exhibits excellent barrier properties to oxygen and carbon dioxide, both when it is printed in an article, for example a container, of the single-layer type and when printed in the form of a multilayer.

The feature of a material to carry out a barrier to the passage of a gas is expressed as the reduced permeability of this material to the gas.

The polymeric composition according to the invention exhibits a reduced oxygen and CO₂ permeability of at least 10% with respect to the same composition which does not include the polyether additive B) as defined above, measured under the same conditions with the DIN 53380 method. One way to express this reduced permeability, therefore a greater barrier effect, is to determine the ratio between the permeability value of the composition without polyether additive B) and the corresponding permeability value of the same composition containing the additive. The higher the ratio is, the more the permeability of the composition of the invention has been reduced, therefore the barrier effect has been increased. Such ratio is called BIF ("Barrier Improvement Factor").

According to the invention, such ratio is BIF ≥ 1.1, i.e. the permeability has been reduced by at least 10%. Preferably, such ratio is BIF ≥ 1.2, i.e. the permeability has been reduced by at least 20%, more preferably, such ratio is BIF ≥ 1.5, i.e. the permeability has been reduced by at least 50%.

In the case in which the polyester A) of the polymeric composition according to the invention comprises PET or its copolymers, as defined below in the comparative Examples 1 and 2, the permeability to oxygen ("Oxygen Transmission Rate" or "OTR") is less than 6 cc/m²/24h/atm and the permeability to carbon dioxide ("CO₂ Transmission Rate" or "CO₂TR") is less than 22 cc/m²/24h/atm, measured by the DIN 53380 method.

According to an aspect of the invention, the thermoplastic polyester A) is present in the polymeric composition in an amount from 80 to 99.7% by weight, preferably between 85 and 99% by weight, more preferably between 85 and 98% by weight, with respect to the total of the composition.

According to an aspect of the invention, the additive B) is present in the polymeric composition in an amount from 0.3 to 15% by weight, preferably between 1 and 12% by weight, more preferably between 2 and 10% by weight, with respect to the total of the composition.

The polymeric composition according to the invention may contain other additives, such as for example thermal stabilizers, UV stabilizers, sliding agents, anti-blocking agents, antioxidant agents, antistatic agents, agents, antifog agents, sealing agents, fillers and others known to those skilled in the art. The additives may be added in the polymerization processes or in the subsequent transformation steps.

### A) Thermoplastic polyester

In one embodiment, the thermoplastic polyester consists of homopolymer of ethylene terephthalate (PET) and/or copolymer of ethylene terephthalate modified with one or more aromatic polycarboxylic acids other than terephthalic acid and/or one or more diols other than ethylene glycol.

Aromatic polycarboxylic acids other than terephthalic acid are selected from isophthalic acid and naphthalendicarboxylic acid.

The diols other than ethylene glycol are selected from 1,4-butanediol (1,4-BDO) and cyclohexanedimethanol (CHDM).

The modifying comonomer, be it the aromatic acid or the diol, is present in an amount up to 15% by moles, preferably up to 10% by moles, with respect to the total moles of aromatic acid or the total moles of diol, respectively.

In another embodiment, the base polymer is a polyester consisting of homopolymer of butylene terephthalate (PBT) and/or copolymer of butylene terephthalate modified with one or more aromatic polycarboxylic acids other than terephthalic acid and/or one or more diols other than 1,4-butanediol.

Aromatic polycarboxylic acids other than terephthalic acid are selected from isophthalic acid and naphthalendicarboxylic acid.

Diols other than 1,4-butanediol are selected from ethylene glycol and cyclohexanedimethanol (CHDM).

The modifying comonomer, be it the aromatic acid or the diol, is present in an amount up to 15% by moles, preferably up to 10% by moles, with respect to the total moles of aromatic acid or the total moles of diol, respectively.

In the remainder of the present description, both the homopolymer PET and the copolymer PET obtained with modifying co-monomers as defined above are designated as PET, and both the homopolymer PBT and the copolymer PBT obtained with modifying co-monomers as defined above are designated as PBT.

Similarly, in the remainder of the present description, the term "aromatic polyester A" designates both PET and PBT as defined above.

The polyester A used, for example PET, may be either virgin PET or PET coming from recycling, and has an intrinsic viscosity from 0.55 to 0.85 dl/g. Virgin PET has an intrinsic viscosity usually higher than 0.76 dl/g while recycled PET flakes have an intrinsic viscosity usually lower than 0.76 dl/g, due to a partial degradation caused by the recycling process. Typical intrinsic viscosity values for PETs used commercially are 0.78 dl/g for virgin PET and 0.65 dl/g for recycled PET flakes. Some types of recycled PET in granules may have intrinsic viscosity values equal to that of the virgin material.

Intrinsic viscosity (IV) is measured by the ASTM D 4603-86 method.

The intrinsic viscosity of PBT, on the other hand, varies from 0.60 to 0.90 dl/g.

In the embodiment in which the polyester A) consists of polylactic acid (PLA), the term "polylactic acid" or "PLA" in the present description means the polyesters of the lactic acid selected from the group consisting of poly L lactic acid, poly D lactic, stereo complex poly DL lactic, copolymers comprising more than 50% by moles of said lactic acid polyesters or mixtures thereof.

Particularly preferred are lactic acid polyesters containing at least 95% by weight of repeating units deriving from L-lactic or D-lactic acid or combinations thereof, with molecular weight Mw greater than 50,000 and with shear viscosity between 50÷700 Pas, preferably between 80÷500Pas (measured according to the ASTM D3835 standard at T= 190°C, shear rate = 1000s-1, D=1mm, L/D=10), such as the Ingeo^{™} Biopolymer 4043D, 3251D and 6202D brand products.

### B) Polyether additive

The polyether additive present in the polymeric composition is a polyalkylene glycol of the formula H-(O-R)n-OH, in which R is a linear or branched alkylene group having 2 to 10 carbon atoms, and n is from 4 to 1000.

Preferably, the polyether additive is selected from the group consisting of polyethylene glycol), poly(trimethylene glycol), poly(tetramethylene glycol), poly(pentamethylene glycol), poly(hexamethylene glycol), poly(heptamethylene glycol), poly(octamethylene glycol) and mixtures thereof.

When R has two carbon atoms, the additive is polyethylene glycol (PEG), also called polyethylene oxide (PEO) or polyoxyethylene (POE), with the general formula:

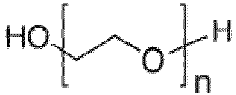

A distinction commonly made by those skilled in the art is to designate as PEG the compound with a MW molecular weight lower than or equal to 20,000 g/mol, and as PEO the compound with a molecular weight greater than 20,000 g/mol.

When R has 3 or 4 carbon atoms the additive is poly(trimethylene glycol) or poly(tetramethylene glycol), respectively, whose formulas are shown below:

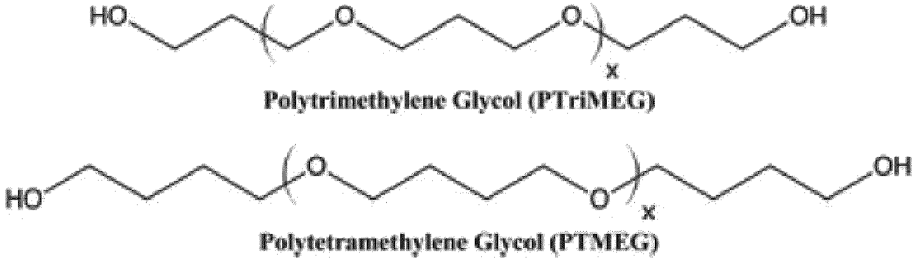

The formulas of the other polyalkylene glycols are similar, with respectively 5, 6, 7 and 8 C atoms interposed between the two oxygen atoms.

Preferably, the polyether additive has a molecular weight of from 100 to 30000 g/mol, with the exception of the case in which the polyether additive is PEO, the molecular weight of which can be up to 2,000,000 g/mol and more.

As pointed out above, it has surprisingly been found that the polyether additive alone exerts an excellent barrier effect against oxygen and carbon dioxide, without the need of other additives, such as layered inorganic compounds.

### Preparation of the polymeric composition and of the articles employing the same

The polymeric composition according to the invention can be prepared by mixing the polyester A and the polyether additive B in various ways, but preferably in an extruder, at a temperature above 240 °C, preferably between 240 and 280 °C.

The aromatic polyester is previously dried.

According to an embodiment, the composition is prepared in the form of masterbatch, that is, in the form with a high concentration of additive B, then the masterbatch is mixed with other polyester A in a quantity such as to bring the quantity of additive to the desired final concentration.

Alternatively, it is also possible to directly feed the additive B in the final concentration during the production of the article.

According to an aspect of the invention, the polymeric composition is free from polyamides and compounds suitable for promoting oxidation reactions by atmospheric oxygen, such as metal catalysts, in particular catalysts consisting of transition metals or salts, oxides and hydroxides thereof.

The term "free" in the present description means that the polymeric composition either does not contain said polyamides and said compounds capable of promoting oxidation reactions, or contains them in minimal quantities, not capable of capturing atmospheric oxygen in significant quantities by chemical reaction. In particular, the term "minimum quantity" means a quantity of polyamide lower than 1% by weight of the composition, and a quantity of compounds suitable for promoting oxidation reactions lower than 0.008% by weight of the composition.

Any metal residues deriving from the catalysts or initiators used in the production of polyester A by polymerization of the starting monomers, or non-catalytic metal compounds, do not fall within the exclusion clause contained in the above definition.

The polymeric composition according to the invention can be transformed into semi-finished or finished manufactured articles, for example containers for the packaging of food and semi-finished products intended for the production of containers, such as single-layer or multi-layer films and preforms for the subsequent production of containers for liquids. In the remainder of the description, the term "film" or "leaf' is used interchangeably while the preform and the bottle have their own specific name.

When the semi-finished product is a multilayer film, it preferably comprises three layers, with the inner layer having a thickness greater than that of the outer layers, i.e. a structure commonly designated as A/B/A, where the symbols A and B do not designate the polyester and the polyether additive but simply the three layers of the structure.

The multilayer film, or sheet, is usually obtained by co-extrusion of the films constituting the individual layers followed by hot coupling of the same directly inside the co-extrusion die. The sheet is then transformed into a finished article such as a container by known processes, usually by thermoforming. The term "container" refers to any article having an opening for the introduction of a product, particularly a food product. Examples of containers are therefore trays, small trays, boxes, bowls, glasses and the like.

The preforms are instead transformed into bottles through the stretch/blow moulding process. The container described above is mainly used as a component of a package whose other component is a closure to be applied on the opening of the container, in order to prevent the product from leaking out and ensure its conservation. The closure film can be flexible or can be formed as a rigid or semi-rigid lid.

In the embodiment in which the multilayer film is a three-layer film, it comprises a central layer in prevalent weight percentage and two outer layers in a reduced weight percentage with respect to the central layer, i.e., the weight ratio between the central layer and the sum of the external layers is >1. The central layer preferably constitutes at least 70% by weight of the three-layer film, more preferably at least 85% by weight of the overall three-layer film. The bottles are instead closed with caps which in some cases also have barrier properties.

As previously stated, the composition according to the invention confers to the semi-finished product, and to the final container, a high passive barrier to the passage of oxygen and CO₂. The term "passive barrier" means a substantially physical barrier to the passage of oxygen and CO₂, i.e. a barrier that is not determined by a reaction of oxygen with the material constituting the barrier itself.

In any case, as previously stated, when the polymeric composition according to the invention, as illustrated in Examples 3-8, comprises a polyester A) consisting of PET or PBT, it is characterized by a low oxygen permeability ("OTR") lower than 6 cc/m²/24h/atm, preferably lower than 5 cc/m²/24h/atm, more preferably lower than 4 cc/m²/24h/atm. Furthermore, the film has a permeability to carbon dioxide ("CO₂TR") lower than 15 cc/m²/24h/atm, preferably lower than 10 cc/m²/24h/atm, more preferably lower than 8 cc/m²/24h/atm.

When the polymeric composition according to the invention comprises a polyester A) consisting of PLA, it is in any case characterized by a large reduction in oxygen permeability ("OTR") and permeability to carbon dioxide ("CO₂TR") with respect to a same composition which does not include the polyether additive B).

As can be seen from the previous description, the polymeric composition of the invention follows a mono-material approach, i.e. it does not include polymers of different nature, which would create problems when the composition must be recycled at the end of the life cycle of the manufactured article made with it.

Furthermore, the barrier additive of the invention is free from inorganic compounds which would alter the fully organic nature of the polymer composition.

### EXAMPLES

### Methods of measurement

The analytical tests were carried out according to the following methods:
- Intrinsic viscosity: ASTM D 4603-86
- OTR (Oxygen Transmission Rate) and CO₂TR(CO₂ Transmission Rate) barrier tests for leaf and film: DIN 53380 (all measured within 7 days from the production date).

### Description of the production of the masterbatches

A virgin PET in granules, previously dried at 160 °C for 6 hours, is added to a Leistritz 27mm co-rotating twin-screw extruder (LID 24). PET is fed at an hourly flow rate of 8 kg/h.

A quantity of poly(tetramethylene glycol) (PTMEG) with a molecular weight MW = 1000 g/mol, in a quantity equal to 20% of the weight of PET, is fed into the same extruder from a secondary dispenser. The PTMEG was previously heated to 60 °C to make it suitable for dosage.

The two components are mixed inside the extruder at a temperature of 260 °C and extruded in the form of spaghetti then cut into granular form.

The production of the other masterbatches follows the same procedure, except that the polyethylene glycol) (PEG) with molecular weight MW = 8000 g/mol and the PEO MW 2,000,000 g/mol do not require any pre-treatment before dosage.

### Materials used

| | |
|---|---|
| Virgin PET: | PPK FR Plastipack Italy supplier |
| Recycled PET: | PETALO 1 DENTIS supplier |
| PTMEG: | MW1000 Sigma Aldrich supplier |
| PBT: | MW6000 Sigma Aldrich supplier |
| PBT: | ULTRADUR 6500 BASF supplier |
| PLA: | 4032 NATUREWORK supplier |
| PEO: | MW 2,000,000 Sigma Aldrich supplier |

### Comparison EXAMPLE 1 (virgin single-layer PET)

10 kg/h of virgin PET, previously dried at 160 °C for 6 hours, are fed into a primary single-screw extruder. The polymer is melted inside the plasticizing screw and subsequently extruded through a flat head die and inserted in a three-cylinder calendar which provides for the cooling of the sheet. The leaf is then collected on a cardboard mandrel and a reel is produced.

The leaf is composed of a single layer of polymer composition.

The conditions for carrying out the test are shown in Table 1.

The leaf thus produced is subsequently analysed by the above method for measuring the permeability to oxygen and CO₂ to verify these two parameters.

Table 1 shows the data emerging from these measures. The data are also reported as BIF ("Barrier Improvement Factor"), i.e. as the ratio between the permeability value of the comparative Example 2 and the corresponding permeability value of the example according to the invention. The higher the ratio is, the more the permeability of the example of the invention has been reduced, therefore the barrier effect has been increased.

### Comparison EXAMPLE 2 (recycled single-layer PET)

This example is carried out using the same process conditions as in the previous EXAMPLE 1 but instead of a virgin PET material a recycled PET material in the form of flakes is used.

Table 1 shows the leaf production data and the resulting permeability analyses and related BIFs.

### EXAMPLE 3 (virgin single-layer PET + 0.5% PTMEG)

The test is performed under the same conditions as the test referred to in EXAMPLE 1 but in addition, a PET-based masterbatch containing 20% poly(tetramethylene glycol) (PTMEG) is added in a concentration equal to 2.5%) of MW = 1000 g/mol.

The concentration of PTMEG in the final polymer composition was 0.5% by weight.

Table 1 shows the leaf production data and the resulting permeability analyses and BIFs.

### EXAMPLE 4 (virgin single-layer PET + 0.5% PEG)

The test is performed under the same conditions as the test referred to in EXAMPLE 1 but in addition, a PET-based masterbatch containing 20% poly(ethylene glycol) (PEG) is added in a concentration equal to 2.5%) of MW = 8000 g/mol.

The concentration of PEG in the final polymer composition was 0.5% by weight.

Table 1 shows the leaf production data and the resulting permeability analyses and BIFs.

### EXAMPLE 5 (virgin single-layer PET + 5% PTMEG)

The test is performed under the same conditions as the test referred to in EXAMPLE 1 but in addition, a PET-based masterbatch containing 20% PTMEG is added in a concentration equal to 25%) of MW = 1000 g/mol.

The concentration of PTMEG in the final polymer composition was 5% by weight.

Table 1 shows the leaf production data and the resulting permeability analyses and BIFs.

### EXAMPLE 6 (virgin single-layer PET + 5% PEG)

The test is performed under the same conditions as the test referred to in EXAMPLE 1 but in addition, a PET-based masterbatch containing 20% of MW = 8000 PEG is added in a concentration equal to 25%.

The concentration of PEG in the final polymer composition was 5% by weight.

Table 1 shows the leaf production data and the resulting permeability analyses and BIFs.

### EXAMPLE 7 (recycled single-layer PET + 5% PTMEG)

The test is performed under the same conditions as the test referred to in EXAMPLE 5 but the virgin PET is replaced with recycled PET.

The concentration of PTMEG in the final polymer composition was 5% by weight.

Table 1 shows the leaf production data and the resulting permeability analyses and BIFs.

### EXAMPLE 8 (recycled single-layer PET + 5% PEG)

The test is performed under the same conditions as the test referred to in EXAMPLE 6 but the virgin PET is replaced with recycled PET.

The concentration of PEG in the final polymer composition was 5% by weight.

Table 1 shows the leaf production data and the resulting permeability analyses and BIFs.

**TABLE 1**

| **Operating Conditions** | **Unit of measurement** | **EX.1 comparison** | **EX. 2 comparison** | **Ex. 3** | **Ex. 4** | **Ex. 5** | **Ex. 6** | **Ex. 7** | **Ex. 8** |
|---|---|---|---|---|---|---|---|---|---|
| PET drying conditions | | 160°C / 6 hours | 160°C / 6 hours | 160°C / 6 hours | 160°C / 6 hours | 160°C / 6 hours | 160°C/ 6 hours | 160°C / 6 hours | 160°C / 6 hours |
| | | | | | | | | | |
| Extruder hourly flow | kg/h | 10 | 10 | 10 | 10 | 10 | 10 | 10 | 10 |
| Extruder screw turns | rpm | 33 | 33 | 33 | 33 | 33 | 33 | 33 | 33 |
| Extruder screw diameter | mm | 60 | 60 | 60 | 60 | 60 | 60 | 60 | 60 |
| Extruder screw length | LID | 30 | 30 | 30 | 30 | 30 | 30 | 30 | 30 |
| Extruder cylinder 1 temperature | °C | 260 | 260 | 260 | 260 | 260 | 260 | 260 | 260 |
| Extruder cylinder 2 temperature | °C | 270 | 270 | 270 | 270 | 270 | 270 | 270 | 270 |
| Extruder cylinder 3 temperature | °C | 280 | 280 | 280 | 280 | 280 | 280 | 280 | 280 |
| Extruder cylinder 4 temperature | °C | 280 | 280 | 280 | 280 | 280 | 280 | 280 | 280 |
| Extruder cylinder 5 temperature | °C | 280 | 280 | 280 | 280 | 280 | 280 | 280 | 280 |
| Extruder cylinder 6 temperature | °C | 280 | 280 | 280 | 280 | 280 | 280 | 280 | 280 |
| Supply chain temperature | °C | 280 | 280 | 280 | 280 | 280 | 280 | 280 | 280 |
| Top calendar cylinder temperature | °C | 32 | 32 | 32 | 32 | 32 | 32 | 32 | 32 |
| Central calendar cylinder temperature | °C | 18 | 18 | 18 | 18 | 18 | 18 | 18 | 18 |
| Lower calendar cylinder temperature | °C | 45 | 45 | 45 | 45 | 45 | 45 | 45 | 45 |
| | | | | | | | | | |
| Leaf structure | | Single-layer | Single-layer | Single-layer | Single-layer | Single-layer | Single-layer | Single-layer | Single-layer |
| Three-layer structure | | -- | -- | -- | -- | -- | -- | -- | -- |
| Leaf thickness | Micron (µm) | 500 | 500 | 500 | 500 | 500 | 500 | 500 | 500 |

| Composition of raw materials | | | | | | | | | |
|---|---|---|---|---|---|---|---|---|---|
| Virgin PET | % | 100 | 0 | 99.5 | 99.5 | 95 | 95 | 0 | 0 |
| Recycled PET | % | 0 | 100 | 0 | 0 | 0 | 0 | 95 | 95 |
| PBT | % | 0 | 0 | 0 | 0 | 0 | 0 | 0 | 0 |
| PETG | % | 0 | 0 | 0 | 0 | 0 | 0 | 0 | 0 |
| PLA | % | 0 | 0 | 0 | 0 | 0 | 0 | 0 | 0 |
| PEG MW8000 | % | 0 | 0 | 0 | 0.5 | 0 | 5 | 0 | 5 |
| PTMEG MW1000 | % | 0 | 0 | 0.5 | 0 | 5 | 0 | 5 | 0 |
| PEO | % | 0 | 0 | 0 | 0 | 0 | 0 | 0 | 0 |
| | | | | | | | | | |
| Oxygen permeability analysis | cc/m²/g/atm | 6.12 | 6.24 | 2.8 | 2.3 | 1.12 | 1.08 | 1.11 | 1.27 |
| Carbon dioxide permeability analysis | cc/m²/g/atm | 22.12 | 23 | 7.22 | 7.47 | 5.8 | 5.4 | 5.2 | 6.12 |
| | | | | | | | | | |
| BIF O₂ | | 1 | 1 | 2.18 | 2.66 | 5.46 | 5.67 | 5.67 | 4.91 |
| BIF CO₂ | | 1 | 1 | 3.06 | 2.96 | 3.81 | 4.26 | 4.42 | 3.76 |

### Comparison EXAMPLE 9 (virgin three-layer PET)

The test is performed under the same conditions of EXAMPLE 1 but instead of producing a single-layer leaf, a three-layer leaf is produced consisting of two outer layers (A/A) produced with a secondary extruder and a central layer (B) produced with the primary extruder. The produced structure of type A/B/A has a percentage composition of the layers of 5/90/5. The material used in the secondary single-screw extruder is the same virgin polymer used in the primary extruder. The secondary extruder operates at a temperature of 280 °C at 22 rpm and the dried virgin PET is fed at 1.1 kg/h.

Table 2 shows the leaf production data and the resulting permeability analyses and BIFs.

### EXAMPLE 10 (three-layer + 5% PEG in central layer with virgin PET)

The test is performed under the same conditions of EXAMPLE 9 but in addition a PET-based masterbatch containing 20% of PEG is added in the primary extruder (central layer B of the sheet), in a concentration equal to 25% of MW = 8000 g/mol.

The concentration of PEG in the final polymer composition was 5% by weight.

Table 2 shows the leaf production data and the resulting permeability analyses and BIFs.

### EXAMPLE 11 (three-layer + 5% PEG in central layer with recycled PET)

The test is performed under the same conditions of EXAMPLE 9 but the virgin PET of the central layer B of the sheet is replaced with recycled PET.

The concentration of PEG in the final polymer composition was 5% by weight.

Table 2 shows the leaf production data and the resulting permeability analyses and BIFs.

### EXAMPLE 12 (three-layer + 1% PEO in central layer with recycled PET)

The test is performed under the same conditions of EXAMPLE 9 but in addition a PET-based masterbatch containing 4% of PEO is added in the primary extruder (central layer B of the sheet), in a concentration equal to 25% of MW = 2000000 g/mol.

The concentration of PEO in the final polymer composition was 1% by weight.

Table 2 shows the leaf production data and the resulting permeability analyses and BIFs.

### Example 13 (4 layers of recycled PET + 5% PTMEG - asymmetrical structure)

The test is performed under the same conditions of EXAMPLE 9 but a 4-layer sheet (A/B/C/A - 5/5/85/5) is produced, composed of two external layers (A/A) in virgin PET produced with a secondary extruder and a central layer (C) produced with the primary extruder with recycled PET and a fourth layer, B, composed of virgin PET coming from a third extruder onto which a PET-based masterbatch containing 20% PTMEG of MW = 1000 g/mol is added, in a concentration equal to 25%.

The concentration of PTMEG in the final polymer composition was 5% by weight.

Table 2 shows the leaf production data and the resulting permeability analyses and BIFs.

### Comparison EXAMPLE 14 (PBT polymer)

The test is performed under the same conditions as the test of EXAMPLE 1 but the base polymer used is PBT previously dried at 150 °C for 5 hours.

Table 2 shows the leaf production data and the resulting permeability analyses and BIFs.

### EXAMPLE 15 (PBT + 5% PTMEG)

The test is performed under the same conditions as the test referred to in EXAMPLE 14 but in addition, a PBT-based masterbatch containing 20% PTMEG is added in a concentration equal to 25%) of MW = 1000 g/mol.

The concentration of PTMEG in the final polymer composition was 5% by weight.

Table 2 shows the leaf production data and the resulting permeability analyses and BIFs.

### Comparison EXAMPLE 16 (PLA polymer)

The test is performed under the same conditions as the test of EXAMPLE 1 but the base resin used is polylactic acid (PLA) previously dried at 60°C for 8 hours.

Table 2 shows the leaf production data and the resulting permeability analyses and BIFs.

### EXAMPLE 17 (PLA + 5% PTMEG)

The test is performed under the same conditions as the test of EXAMPLE 16 but in addition a PLA-based masterbatch containing 20% PTMEG of MW = 1000 g/mol, in a concentration equal to 25%, is added.

The concentration of PTMEG in the final polymer composition was 5% by weight.

Table 2 shows the leaf production data and the resulting permeability analyses and BIFs.

**TABLE 2**

| **Operating Conditions** | **Unit of measure ment** | **Ex. 9 compariso n** | **EX. 10** | **Ex. 11** | **Ex. 12** | **EX. 13** | **Ex. 14 compariso n** | **Ex. 15** | **Ex. 16 compariso n** | **Ex. 17** |
|---|---|---|---|---|---|---|---|---|---|---|
| | | | | | | | | | | |

| PET drying conditions | | 160°C / 6 hours | 160°C / 6 hours | 160°C / 6 hours | 160°C / 6 hours | 160°C /6 hours | 160°C / 6 hours | 160°C / 6 hours | 160°C / 6 hours | 160°C / 6 hours |
|---|---|---|---|---|---|---|---|---|---|---|
| | | | | | | | | | | |
| Extruder hourly flow | kg/h | 10 | 10 | 10 | 10 | 10 | 10 | 10 | 10 | 10 |
| Extruder screw turns | rpm | 33 | 33 | 33 | 33 | 33 | 33 | 33 | 33 | 33 |
| Extruder screw diameter | mm | 60 | 60 | 60 | 60 | 60 | 60 | 60 | 60 | 60 |
| Extruder screw length | LID | 30 | 30 | 30 | 30 | 30 | 30 | 30 | 30 | 30 |
| Extruder cylinder 1 temperature | °C | 260 | 260 | 260 | 260 | 260 | 260 | 260 | 260 | 260 |
| Extruder cylinder 2 temperature | °C | 270 | 270 | 270 | 270 | 270 | 270 | 270 | 270 | 270 |
| Extruder cylinder 3 temperature | °C | 280 | 280 | 280 | 280 | 280 | 280 | 280 | 280 | 280 |
| Extruder cylinder 4 temperature | °C | 280 | 280 | 280 | 280 | 280 | 280 | 280 | 280 | 280 |
| Extruder cylinder 5 temperature | °C | 280 | 280 | 280 | 280 | 280 | 280 | 280 | 280 | 280 |
| Extruder cylinder 6 temperature | °C | 280 | 280 | 280 | 280 | 280 | 280 | 280 | 280 | 280 |
| Supply chain temperature | °C | 280 | 280 | 280 | 280 | 280 | 280 | 280 | 280 | 280 |
| Top calendar cylinder temperature | °C | 32 | 32 | 32 | 32 | 32 | 32 | 32 | 32 | 32 |
| Central calendar cylinder temperature | °C | 18 | 18 | 18 | 18 | 18 | 18 | 18 | 18 | 18 |
| Lower calendar cylinder temperature | °C | 45 | 45 | 45 | 45 | 45 | 45 | 45 | 45 | 45 |

| **Operating Conditions** | **Unit of measure ment** | **Ex. 9 compariso n** | **EX. 10** | **Ex. 11** | **Ex. 12** | **EX. 13** | **Ex. 14 compariso n** | **Ex. 15** | **Ex. 16 compariso n** | **Ex. 17** |
|---|---|---|---|---|---|---|---|---|---|---|
| Leaf structure | | Three-layer | Three-layer | Three-layer | Three-layer | 4 layers | Single-layer | Single-layer | Single-layer | Single-layer |
| Three-layer structure | | 5/90/5 | 5/90/5 | 5/90/5 | 5/90/5 | 5/5/85/5 | - | - | - | - |
| Leaf thickness | Micron (µm) | 500 | 500 | 500 | 500 | 500 | 500 | 500 | 500 | 500 |
| Composition of raw materials | | | | | | | | | | |
| Virgin PET | % | 5/90/5 | 5/85/5 | 5/0/5 | 5/0/5 | 5/5/0/5 | 0 | 0 | 0 | 0 |
| Recycled PET | % | 0 | 0 | 0/85/0 | 0/89/0 | 0/0/80/0 | 0 | 0 | | 0 |
| PBT | % | 0 | 0 | 0 | 0 | 0 | 100 | 95 | 0 | 0 |
| PETG | % | 0 | 0 | 0 | 0 | 0 | 0 | 0 | 0 | 0 |
| PLA | % | 0 | 0 | 0 | 0 | 0 | 0 | 0 | 100 | 95 |
| PEG MW8000 | % | 0 | 0/5/0 | 0/5/0 | 0 | 0 | 0 | 0 | 0 | 0 |
| PTMEG MW1000 | % | 0 | 0 | 0 | 0 | 0/0/5/0 | 0 | 5 | | 5 |
| PEG | % | 0 | 0 | 0 | 0/1/0 | 0 | 0 | 0 | 0 | 0 |
| | | | | | | | | | | |
| Oxygen permeability analysis | cc/m²/g/at m | 6.47 | 1.21 | 1.23 | 1.1 | 1.5 | 3.77 | 0.23 | 55 | 21 |
| Carbon dioxide permeability analysis | cc/m²/g/at m | 23.9 | 6.01 | 6.8 | 5.9 | 6.90 | 35 | 3.1 | 90 | 33 |
| | | | | | | | | | | |
| BIF O₂ | | 1 | 5.35 | 5.26 | 5.88 | 4.3 | 1 | 16.4 | 1 | 2.62 |
| BIF CO₂ | | 1 | 3.98 | 3.51 | 4.05 | 3.46 | 1 | 11.3 | 1 | 2.73 |

### Comparison EXAMPLE 18

### Preform production (virgin PET only)

Using a HUSKY GL300 PET series machine and the relative mild, multilayer preforms were produced through two injection units A and B capable of creating an A/B/A structure. The machine was equipped with a mild for the production of 25g preforms.

Using virgin PET previously dried at 160 °C for 4 hours as raw material, preforms with structure A/B/A (structure 40/10/40) made up of 100% virgin PET were produced.

All the preforms produced above were "blown" in a SIDEL machine to produce 375ml bottles through a biaxial heating and stretching process.

Table 3 shows the bottle production data and the resulting permeability analyses and BIFs.

### EXAMPLE 19

### Production of preforms with virgin PET + 1% PTMEG on the whole structure

Using a HUSKY GL300 PET series machine and the relative mild, multilayer preforms were produced through two injection units A and B capable of creating an A/B/A structure. The machine was equipped with a mild for the production of 25g preforms.

Using virgin PET previously dried at 160 °C for 4 hours as raw material, preforms with structure A/B/A (structure 40/10/40) were produced. A masterbatch containing 20% PTMEG MW1000 at a concentration of 5% in addition to virgin PET was added to the PET on both injection groups. The entire preform structure contains 1% PTMEG.

All the preforms produced above were "blown" in a SIDEL machine to produce 375ml bottles through a biaxial heating and stretching process.

Table 3 shows the bottle production data and the resulting permeability analyses and BIFs.

### EXAMPLE 20

### Production of preforms with virgin PET + 1% PEG on the whole structure

The test is performed under the same conditions as the test of EXAMPLE 19 by replacing the masterbatch containing PTMEG with a masterbatch containing PEG MW8000 at 20% at a concentration of 5% in addition to the virgin PET. The entire preform structure contains 1% of PEG MW8000.

All the preforms produced above were "blown" in a SIDEL machine to produce 375ml bottles through a biaxial heating and stretching process.

Table 3 shows the bottle production data and the resulting permeability analyses and BIFs.

### EXAMPLE 21

### Production of preforms with virgin PET + 5% PEG on layer B (multilayer structure)

The test is performed under the same conditions as the test of EXAMPLE 19 but in layer B a masterbatch containing PEG MW8000 at 20% instead of PTMEG is added, at a concentration of 25% in addition to the virgin PET. A multilayer structure was created where the additive is in the central layer at a concentration of 5%.

All the preforms produced above were "blown" in a SIDEL machine to produce 375ml bottles through a biaxial heating and stretching process.

Table 3 shows the bottle production data and the resulting permeability analyses and BIFs.

### EXAMPLE 22

### Production of preforms with virgin PET + 5% PTMEG on layer B (multilayer structure)

The test is performed under the same conditions as the test of EXAMPLE 19 but in layer B a masterbatch containing 20% PTMEG MW1000 at a concentration of 25% is added in addition to the virgin PET. A multilayer structure was created where the additive is in the central layer at a concentration of 5%.

All the preforms produced above were "blown" in a SIDEL machine to produce 375ml bottles through a biaxial heating and stretching process.

Table 3 shows the bottle production data and the resulting permeability analyses and BIFs.

### EXAMPLE 23

### Production of preforms with recycled PET + 5% PTMEG on layer B (multilayer structure)

The test is performed under the same conditions as the test referred to in EXAMPLE 19 but with the variant that the PET used is a recycled PET.

All the preforms produced above were "blown" in a SIDEL machine to produce 375ml bottles through a biaxial heating and stretching process.

Table 3 shows the bottle production data and the resulting permeability analyses and BIFs.

**TABLE 3**

| **Operating Conditions** | **Unit of measurement** | **Comparison EX. 18** | **EX. 19** | **Ex. 20** | **Ex. 21** | **Ex. 22** | **Ex. 23** |
|---|---|---|---|---|---|---|---|
| PET drying conditions | | 160°c / 6 hours | 160°c / 6 hours | 160°c / 6 hours | 160°c / 6 hours | 160°c / 6 hours | 160°c / 6 hours |
| | | | | | | | |
| Injection process hourly flow | kg/h | 320 | 320 | 10 | 10 | 10 | 10 |
| Screw turns | rpm | 33 | 33 | 33 | 33 | 33 | 33 |
| Extruder screw diameter | mm | 90 | 90 | 60 | 60 | 60 | 60 |
| Extruder cylinder 1 temperature | °C | 260 | 260 | 260 | 260 | 260 | 260 |
| Extruder cylinder 2 temperature | °C | 270 | 270 | 270 | 270 | 270 | 270 |
| Extruder cylinder 3 temperature | °C | 280 | 280 | 280 | 280 | 280 | 280 |
| Extruder cylinder 4 temperature | °C | 280 | 280 | 280 | 280 | 280 | 280 |
| Extruder cylinder 5 temperature | °C | 280 | 280 | 280 | 280 | 280 | 280 |
| Nozzle temperature | °C | 280 | 280 | 280 | 280 | 280 | 280 |
| Hot mild temperature | °C | 280 | 280 | 280 | 280 | 280 | 280 |
| Cold mild temperature | °C | 20°C | 20°C | | | | |
| Injection pressure | Bar | 98 | 98 | 32 | 32 | 32 | 32 |
| Back pressure | Bar | 120 | 120 | 18 | is | 18 | is |
| Cycle time | sec | 13 | 13 | 45 | 45 | 45 | 45 |
| | | | | | | | |
| Preform structure | | Single layer | Multi layer | Multi layer | Multi layer | Multi layer | Multi layer (recycled) |
| Three-layer structure | | -- | -- | -- | -- | -- | -- |
| Preform weight | Grams | 25.1 | 25.1 | 25.1 | 25.1 | 25.1 | 25.1 |
| Composition of raw materials | | | | | | | |

| **Operating Conditions** | **Unit of measurement** | **Comparison EX. 18** | **EX. 19** | **Ex. 20** | **Ex. 21** | **Ex. 22** | **Ex. 23** |
|---|---|---|---|---|---|---|---|
| Virgin PET | % | 100 | 99 | 99 | 99.5 | 95 | 0 |
| Recycled PET | % | 0 | 0 | 0 | 0 | 0 | 95 |
| PEG MW8000 | % | 0 | 0 | 1 (on the whole structure) | 5 (only on middle layer B) | 0 | 0 |
| PTMEG MW1000 | % | 0 | 1 (on the whole structure) | 0 | 0 | 5 (only on the middle layer B) | 5 (only on the middle layer B) |
| | | | | | | | |
| Blown bottle volume | ml | 370 | 370 | 370 | 370 | 370 | 370 |
| | | | | | | | |
| | | | | | | | |
| Oxygen permeability analysis | cc/package /day/atm | 0.028 | 0.018 | 0.019 | 0.011 | 0.011 | 0.012 |
| Carbon dioxide permeability analysis | cc/package /day/atm | 0.1 | 0.07 | 0.078 | 0.035 | 0.031 | 0.033 |
| | | | | | | | |
| BIF O₂ | | 1 | 1.56 | 1.47 | 2.54 | 2.54 | 2.33 |
| BIF CO₂ | | 1 | 1.43 | 1.28 | 2.86 | 3.22 | 3.03 |

## Claims

1. Polymeric composition comprising:
A) a thermoplastic polyester selected from the group consisting of polyethylene terephthalate, copolymers of polyethylene terephthalate containing up to 15% by moles of units derived from other aromatic acids selected from isophthalic acid and naphthalenedicarboxylic acid and/or with other diols selected from 1.4-butanediol (1.4-BDO) and cyclohexandimethanol (CHDM), polybutylene terephthalate (PBT) and copolymers of polybutylene terephthalate containing up to 10% by moles of units derived from other aromatic acids selected from isophthalic and naphthalenedicarboxylic acid and/or with other diols selected from 1,2-ethanediol and cyclohexanediethanol (CHDM), and mixtures thereof, and polylactic acid (PLA); and
B) a barrier additive consisting of a polyalkylene glycol of the formula H-(O-R)n-OH, in which R is a linear or branched alkylene group having 2 to 10 carbon atoms, and n is from 4 to 1000;
wherein:
i. said polyester A) is present in the polymeric composition in an amount from 80 to 99.5% by weight and said additive B) is present in the polymeric composition in a quantity from 0.5 to 20% by weight, said amounts being referred to the sum of components A) and B ); and
ii. said polymeric composition is free from polyamides and additives susceptible to catalytic oxidation by atmospheric oxygen.

2. Polymeric composition according to claim 1, **characterized in that** said barrier additive is free from inorganic barrier additives.

3. Polymeric composition according to claim 1 or 2, **characterized in that** said alkylene glycol B) is selected from the group consisting of poly(ethylene glycol), poly(trimethylene glycol), poly(tetramethylene glycol), poly(pentamethylene glycol), poly(hexamethylene glycol), poly(heptamethylene glycol), poly(octamethylene glycol) and their mixtures.

4. Polymeric composition according to one or more of the preceding claims, **characterized in that** said thermoplastic polyester A) is PET having an intrinsic viscosity from 0.55 to 0.85 dl/g measured by ASTM D 4603-86 method, and is chosen between virgin PET, recycled PET or a mixture of the these.

5. Polymeric composition according to one or more of the preceding claims, **characterized in that** said polyether additive B) has a molecular weight from 100 to 30000 g/mol, or, if the polyether additive is PEO, has a molecular weight up to 2,000,000 g/mol.

6. Polymeric composition according to one or more of the preceding claims, **characterized in that** the ratio between the oxygen permeability value ("OTR") of the composition without polyether additive B) and the corresponding permeability value of the same composition containing the additive ("Barrier Improvement Factor") is ≥ 1.1, preferably is ≥ 1.2, more preferably is ≥ 1.5, measured by the method DIN 5338.

7. Polymeric composition according to one or more of the preceding claims, **characterized in that** the ratio between the carbon dioxide permeability value ("CO2TR") of the composition without polyether additive B) and the corresponding permeability value of the same composition containing the additive ("Barrier Improvement Factor") is ≥ 1.1, preferably is ≥ 1.2, more preferably is ≥ 1.5, measured by the DIN 5338 method.

8. Use of the polymer composition according to one or more of the preceding claims for the production of an article of packaging.

9. Article of packaging including polymer composition according to one or more of the above claims.

10. Article of packaging according to Claim 9 in amorphous or multilayer structure in amorphous or crystalline state, mono-oriented or bi-oriented, selected from tray, film, bottle and capsule, said article being produced by extrusion and/or injection processes.

11. Use of the article of packaging according to claim 9 or 10 for the packaging of food products in modified atmosphere containing carbon dioxide, or nitrogen, or oxygen and/or mixtures thereof.

## Patentansprüche

1. Polymerzusammensetzung, umfassend:
A) ein thermoplastischer Polyester, ausgewählt aus der Gruppe bestehend aus Polyethylenterephthalat, Copolymeren von Polyethylenterephthalat, die bis zu 15 Mol-% an Einheiten enthalten, die von anderen aromatischen Säuren abgeleitet sind, ausgewählt aus Isophthalsäure und Naphthalindicarbonsäure und/oder mit anderen Diolen, ausgewählt aus 1,4-Butandiol (1,4-BDO) und Cyclohexandimethanol (CHDM), Polybutylenterephthalat (PBT) und Copolymeren von Polybutylenterephthalat, die bis zu 10 Mol-% an Einheiten enthalten, die von anderen aromatischen Säuren abgeleitet sind, ausgewählt aus Isophthalsäure und Naphthalindicarbonsäure und/oder mit anderen Diolen, ausgewählt aus 1,2-Ethandiol und Cyclohexandiethanol (CHDM) und Mischungen davon, und Polymilchsäure (PLA); und
B) ein Barriereadditiv bestehend aus einem Polyalkylenglykol der Formel H-(O-R)n-OH, in der R eine lineare oder verzweigte Alkylengruppe ist, die 2 bis 10 Kohlenstoffatome aufweist, und n von 4 bis 1000 reicht;
wobei:
i. der Polyester A) in einer Menge von 80 bis 99,5 Gew.-% in der Polymerzusammensetzung vorhanden ist und das Additiv B) in einer Quantität von 0,5 bis 20 Gew.-% in der Polymerzusammensetzung vorhanden ist, wobei diese Mengen auf die Summe der Komponenten A) und B) bezogen sind; und
ii. die Polymerzusammensetzung frei von Polyamiden und Additiven ist, die anfällig für eine katalytische Oxidation durch atmosphärischen Sauerstoff sind.

2. Polymerzusammensetzung nach Anspruch 1, **dadurch gekennzeichnet, dass** das Barriereadditiv frei von anorganischen Barriereadditiven ist.

3. Polymerzusammensetzung nach Anspruch 1 oder 2, **dadurch gekennzeichnet, dass** das Alkylenglykol B) ausgewählt ist aus der Gruppe bestehend aus Poly(ethylenglykol), Poly(trimethylenglykol), Poly(tetramethylenglykol), Poly(pentamethylenglykol), Poly(hexamethylenglykol), Poly(heptamethylenglykol), Poly(octamethylenglykol) und deren Mischungen.

4. Polymerzusammensetzung nach einem oder mehreren der vorstehenden Ansprüche, **dadurch gekennzeichnet, dass** der thermoplastische Polyester A) PET ist, das eine Grenzviskosität von 0,55 bis 0,85 dl/g, gemessen nach dem Verfahren ASTM D 4603-86, aufweist, und zwischen unbehandeltem PET, recyceltem PET oder einer Mischung aus diesen ausgewählt ist.

5. Polymerzusammensetzung nach einem oder mehreren der vorstehenden Ansprüche, **dadurch gekennzeichnet, dass** das Polyetheradditiv B) ein Molekulargewicht von 100 bis 30000 g/mol aufweist oder, wenn das Polyetheradditiv PEO ist, ein Molekulargewicht von bis zu 2.000.000 g/mol aufweist.

6. Polymerzusammensetzung nach einem oder mehreren der vorstehenden Ansprüche, **dadurch gekennzeichnet, dass** das Verhältnis zwischen dem Sauerstoffdurchlässigkeitswert ("OTR") der Zusammensetzung ohne Polyetheradditiv B) und dem entsprechenden Durchlässigkeitswert der gleichen Zusammensetzung, die das Additiv enthält ("Barrier Improvement Factor") ≥ 1,1, bevorzugt ≥ 1,2, bevorzugter ≥ 1,5, gemessen nach dem Verfahren DIN 5338, ist.

7. Polymerzusammensetzung nach einem oder mehreren der vorstehenden Ansprüche, **dadurch gekennzeichnet, dass** das Verhältnis zwischen dem Kohlendioxiddurchlässigkeitswert ("CO2TR") der Zusammensetzung ohne Polyetheradditiv B) und dem entsprechenden Durchlässigkeitswert der gleichen Zusammensetzung, die das Additiv enthält ("Barrier Improvement Factor") ≥ 1,1, bevorzugt ≥ 1,2, bevorzugter ≥ 1,5, gemessen nach dem DIN 5338 Verfahren, ist.

8. Verwendung der Polymerzusammensetzung nach einem oder mehreren der vorstehenden Ansprüche zur Herstellung eines Verpackungsartikels.

9. Verpackungsartikel, der eine Polymerzusammensetzung nach einem oder mehreren der vorstehenden Ansprüche beinhaltet.

10. Verpackungsartikel nach Anspruch 9 in amorpher oder mehrschichtiger Struktur in amorphem oder kristallinem Zustand, mono- oder bi-orientiert, ausgewählt aus Schale, Folie, Flasche und Kapsel, wobei der Artikel durch Extrusion und/oder Spritzgussprozesse hergestellt wird.

11. Verwendung des Verpackungsartikels nach Anspruch 9 oder 10 zum Verpacken von Lebensmitteln in modifizierter Atmosphäre, die Kohlendioxid oder Stickstoff oder Sauerstoff und/oder Mischungen davon enthält.

## Revendications

1. Composition polymère comprenant :
A) un polyester thermoplastique choisi dans le groupe consistant en le polyéthylène téréphtalate, les copolymères de polyéthylène téréphtalate contenant jusqu'à 15 % en moles d'unités dérivées d'autres acides aromatiques choisis parmi l'acide isophtalique et l'acide naphtalènedicarboxylique et/ou avec d'autres diols choisis parmi le 1,4-butanediol (1,4-BDO) et le cyclohexandiméthanol (CHDM), le polybutylène téréphtalate (PBT) et les copolymères de polybutylène téréphtalate contenant jusqu'à 10 % en moles d'unités dérivées d'autres acides aromatiques choisis parmi l'acide isophtalique et l'acide naphtalènedicarboxylique et/ou avec d'autres diols choisis parmi le 1,2-éthanediol et le cyclohexanediéthanol (CHDM), et des mélanges de ceux-ci, et l'acide polylactique (PLA) ; et
B) un additif barrière consistant en un polyalkylène glycol de formule H-(OR)n-OH, dans laquelle R est un groupe alkylène linéaire ou ramifié présentant 2 à 10 atomes de carbone, et n est de 4 à 1 000 ;
dans laquelle :
i. ledit polyester A) est présent dans la composition polymère en une quantité de 80 à 99,5 % en poids et ledit additif B) est présent dans la composition polymère en une quantité de 0,5 à 20 % en poids, lesdites quantités se référant à la somme des composants A) et B) ; et
ii. ladite composition polymère est exempte de polyamides et d'additifs prédisposés à une oxydation catalytique par l'oxygène atmosphérique.

2. Composition polymère selon la revendication 1, **caractérisée en ce que** ledit additif barrière est exempt d'additifs barrières inorganiques.

3. Composition polymère selon la revendication 1 ou 2, **caractérisée en ce que** ledit alkylène glycol B) est choisi dans le groupe consistant en le poly(éthylène glycol), le poly(triméthylène glycol), le poly(tétraméthylène glycol), le poly(pentaméthylène glycol), le poly(hexaméthylène glycol), le poly(heptaméthylène glycol), le poly(octaméthylène glycol) et leurs mélanges.

4. Composition polymère selon une ou plusieurs des revendications précédentes, **caractérisée en ce que** ledit polyester thermoplastique A) est du PET présentant une viscosité intrinsèque de 0,55 à 0,85 dl/g mesurée par le procédé ASTM D 4603-86, et est choisi entre du PET vierge, du PET recyclé ou un mélange de ceux-ci.

5. Composition polymère selon une ou plusieurs des revendications précédentes, **caractérisée en ce que** ledit additif polyéther B) présente un poids moléculaire de 100 à 30 000 g/mol, ou, si l'additif polyéther est du PEO, présente un poids moléculaire allant jusqu'à 2 000 000 g/mol.

6. Composition polymère selon une ou plusieurs des revendications précédentes, **caractérisée en ce que** le rapport entre la valeur de perméabilité à l'oxygène (« OTR ») de la composition sans additif polyéther B) et la valeur de perméabilité correspondante de la même composition contenant l'additif (« Facteur d'amélioration de barrière ») est ≥ 1,1, de préférence ≥ 1,2, plus préférentiellement ≥ 1,5, mesuré par le procédé DIN 5338.

7. Composition polymère selon une ou plusieurs des revendications précédentes, **caractérisée en ce que** le rapport entre la valeur de perméabilité au dioxyde de carbone (« CO2TR ») de la composition sans additif polyéther B) et la valeur de perméabilité correspondante de la même composition contenant l'additif (« Facteur d'amélioration de barrière ») est ≥ 1,1, de préférence ≥ 1,2, plus préférentiellement ≥ 1,5, mesuré par le procédé DIN 5338.

8. Utilisation de la composition polymère selon une ou plusieurs des revendications précédentes pour la production d'un article d'emballage.

9. Article d'emballage incluant une composition polymère selon une ou plusieurs des revendications précédentes.

10. Article d'emballage selon la revendication 9 à structure amorphe ou multicouche à l'état amorphe ou cristallin, mono-orientée ou bi-orientée, choisi parmi barquette, film, flacon et capsule, ledit article étant produit par des processus d'extrusion et/ou d'injection.

11. Utilisation de l'article d'emballage selon la revendication 9 ou 10 pour l'emballage de produits alimentaires sous atmosphère modifiée contenant du dioxyde de carbone, ou de l'azote, ou de l'oxygène et/ou des mélanges de ceux-ci.
